Europäisches Patentamt

European Patent Office

Office européen des brevets

(11) Publication number : **0 222 623**
**B1**

(12) **EUROPEAN PATENT SPECIFICATION**

(45) Date of publication of patent specification :
28.03.90

(21) Application number : **86308835.7**

(22) Date of filing : **12.11.86**

(51) Int. Cl.⁵ : **G 21 C   3/32**

(54) **Fixture for rectifying guide-thimble damage in reconstitutable nuclear fuel assemblies.**

(30) Priority : 12.11.85 US 797333
12.11.85 US 797337

(43) Date of publication of application :
20.05.87 Bulletin 87/21

(45) Publication of the grant of the patent :
28.03.90 Bulletin 90/13

(84) Designated contracting states :
BE DE FR GB IT SE

(56) References cited :
EP--A-- 0 140 588
EP--A-- 0 175 974
EP--A-- 0 182 149
EP--A-- 0 187 651
EP--A-- 0 189 797
DE--A-- 2 520 345
GB--A-- 2 115 599
US--A-- 3 904 048

(73) Proprietor : WESTINGHOUSE ELECTRIC CORPORA-
TION
Westinghouse Building Gateway Center
Pittsburgh Pennsylvania 15235 (US)

(72) Inventor : Shallenberger, John Milton
120 W Chapel Ridge Road
Pittsburgh, PA 15238 (US)
Inventor : Ferlan, Stephen Joseph
895 Rita Drive
Pittsburgh, PA 15221 (US)

(74) Representative : van Berlyn, Ronald Gilbert
23, Centre Heights
London, NW3 6JG (GB)

## Description

The present invention relates generally to fuel assemblies for nuclear reactors and, more particularly, to a fixture for rectifying, i. e. repairing or removing, damaged upper end portions of guide thimbles during fuel-assembly reconstitution.

In most nuclear reactors, the reactor core is composed of a large number of elongate fuel assemblies. Usually, each fuel assembly includes a plurality of fuel rods and control-rod guide thimbles held in an organized array by grids spaced along the fuel assembly and attached to the control-rod guide thimbles. The fuel assembly includes further top and bottom nozzles secured at the opposite ends of the fuel assembly to guide-thimble end portions which extend somewhat beyond the opposite fuel-rod ends, the upper end portions of the guide thimbles extending into passageways formed through the so-called adapter plate of the top nozzle, and being attached within the respective passageways to the adapter plate. Said upper end portions of the guide thimbles may be integral extensions of the respective guide thimbles or sleeves attached to the latter.

During use of a fuel assembly in a nuclear reactor, some of its fuel rods may occasionally develop cracks, due primarily to internal stresses, in which event there is the possibility of radioactive fission products seeping into the primary coolant of the reactor. One way of coping with this situation, if it arises, is to replace the whole fuel assembly or assemblies containing the defective fuel rods. In an endeavor to avoid the high cost of replacing whole fuel assemblies, there recently have been developed fuel assemblies which are reconstitutable in that their top nozzles can be removed to allow for the replacement of individual fuel rods, and then can be remounted so as to restore the fuel assemblies to a condition for re-use in a reactor core.

One approach to top-nozzle removal is described in U. S. patent No. 4,535,523. It involves severing the guide thimbles just below the top-nozzle adapter plate to allow for removal of the top nozzle, and thereafter replacing the removed top nozzle with a new top nozzle equipped with short tubes which have a diameter slightly larger than the outside diameter of the guide thimbles and are slipped over and bulge-fit to the shortened ends of the guide thimbles. This approach has drawbacks insofar as it requires a new top nozzle to replace the removed one, and allows the fuel assembly to be reconstituted but once.

Another manner of rendering fuel assemblies reconstitutable is described in Applicant's European patent publication No. 0 140 588 which discloses a releasable attaching structure for removably connecting the top nozzle of a fuel assembly to upper end portions of its guide thimbles. Various tools and fixtures suitable for use in releasing and installing these attaching structures for the purpose of removing and remounting top nozzles are disclosed in Applicant's European patent publications Nos. 0 182 149, 0 183 068, 0 187 651, and 0 189 797, whereas a more recent design of a re-usable locking-tube suitable for use with such attaching structure is disclosed in Applicant's European patent application No. 86 302 415.4-2208.

Basically, the above-mentioned attaching structure for each guide thimble to be attached to the top nozzle comprises an outer socket defined by a passageway through the adapter plate of the top nozzle and having an annular groove formed in its peripheral wall, and an inner socket defined by an upper end portion of the guide thimble which extends axially into the outer socket and has on its outer periphery an annular bulge in locking engagement with the annular groove of the outer socket. In order to facilitate insertion of the inner socket with the bulge thereon into the outer socket, and to facilitate subsequent dislodgement of the bulge from the annular groove and withdrawal of the inner socket from the outer socket, the upper end portion of the guide thimble defining the inner socket preferably has elongate slots longitudinally formed therein from the upper end thereof, which slots facilitate resilient compression or collapse of the guide-thimble end portion for the purpose stated above. In order to prevent accidental release of the attaching structure, the latter includes also a locking tube which is inserted into the inner socket, when in its locking position within the outer socket, to prevent resilient collapse of the inner socket and, hence, dislodgement of its annular bulge from the groove in the outer socket.

Although unlikely, there is a possibility, even though remote, for one or another of the guide-thimble upper end portions forming the inner sockets of the various attaching structures to become damaged during reconstitution of the fuel assembly when its top nozzle is removed and the upper end portions of the guide thimble lie exposed. Such damage may be caused by objects accidentally dropped onto, or equipment accidentally bumping, the upper end portions of some guide thimbles and thereby deforming them by bending sections thereof inwards or outwards relative to the longitudinal axes of the respective guide thimbles. Guide-thimble end portions thus damaged are unsuitable for further use as inner sockets since, if bent outwards, they will not fit into any outer socket formed in the top-nozzle adapter plate and, if bent inwards, they will not properly seat and lock within the associated outer socket.

It is the principal object of the invention to provide an arrangement or fixture enabling such damage, if done to any guide-thimble end portion, to be rectified so as to restore the latter to a condition permitting it to be re-used as part of the attaching structure between the guide thimble and the top nozzle.

The invention accordingly resides in fixture for rectifying different types of deformation damage to upper end portions of guide thimbles of a reconstitutable fuel assembly while the fuel assembly is being held in a work station and has its top nozzle removed to expose the guide thimbles end portions, characterized by (a) a base having a plurality of tool-positioning openings defined therein in a pattern matching the pattern of the guide thimbles in the fuel assembly; means for mounting said base on said work station such that said tool-positioning openings are in axial alignment with the upper end portions of the respective guide thimbles of the fuel assembly; and several different kinds of tools each for rectifying one of the different types of guide-thimble damage, said tools being selectively mountable in the tool-positioning openings and operable each to rectify the particular type of damage to the guide-thimble end portion aligned with the tool-positioning opening having the tool mounted therein.

The means for mounting the base on the work station are adapted to guide the base for movement thereof between a first position in which any said tool mounted in one of the tool-positioning openings of the base and aligned with a damaged guide-thimble end portion is spaced from the latter, and a second position in which the tool is in operative engagement with said guide-thimble end portion.

The base has disposed thereon positioning elements effective, upon movement of the base to said second position, to ensure precise alignment of said tool-positioning openings with the respective guide thimbles of the fuel assembly. These positioning elements are selectively mounted in tool-positioning openings which are located in positions corresponding to the positions of undamaged ones of said guide thimbles in the fuel assembly, and each of them is designed to telescopically engage the associated undamaged guide-thimble end portion, without deforming it, upon movement of the base to said second position thereof. In the preferred embodiment described later herein, each of the positioning elements is a non-compressing socket adapted to slide telescopically over the associated undamaged guide-thimble end portion.

The different kinds of tools include a compressing socket for repairing outwardly bent guide-thimble end portions, which compressing socket, upon movement of the base to its second position, slides telescopically over the outwardly bent guide-thimble end portion aligned therewith and compresses it to its original shape. The different kinds of tools include also an expander pin for repairing inwardly bent guide-thimble end portions, which expander pin, upon movement of the base to the second position thereof, penetrates axially into the inwardly bent guide-thimble end portion aligned therewith and expands it to its original shape. Furthermore, the different kinds of tools include a tube cutter for severing and capturing, for removal from the fuel assembly, irreparably damaged sections of guide-thimble end portions; movement of the base to the second position thereof positions the tube cutter for severing the irreparably damaged section of the guide-thimble end portion aligned therewith, whereupon the tube cutter is operable to sever and capture the irreparably damaged section.

Of course, severing an irreparably damaged section from a guide-thimble end portion shortens the latter so that subsequently, when the top nozzle is remounted on the guide-thimble end portions, there would be a gap between the upper end of the shortened guide thimble and the adapter plate of the remounted top nozzle, which gap could result in undesirable coolant cross-flow during subsequent use of the reconstituted fuel assembly. In order to remedy this situation, the invention provides adapter means designed to replace the irreparably damaged section severed from a guide-thimble end portion. The adapter means comprises an elongate member adapted to be rigidly connected to one, and to be slip-fit to the other, of the top nozzle of the fuel assembly and the shortened guide-thimble end portion from which the irreparably damaged section was severed, thereby to form a non-structural joint between the top nozzle and the guide-thimble having the shortened end portion. Preferably, the adapter means is a sleeve having one end portion which fits into the respective passageway (outer socket) in the adapter plate of the top nozzle, and an opposite end portion which is telescopically connectable to the shortened guide-thimble end portion, said one end portion of the sleeve being adapted to be rigidly connected, e. g. bulge-fit, to the adapter plate when inserted in the passageway, and said opposite end portion of the sleeve being adapted to be slip-fit onto shortened guide-thimble end portion.

A preferred embodiment of the invention will now be described, by way of example only, with reference to the accompanying drawings, in which:

Fig. 1 is a side elevational view of a reconstitutable fuel assembly shown in vertically foreshortened form and with parts partially sectioned and broken away for clarity;

Fig. 2 is a sectioned, exploded view of the components of the attaching structure associated with the top nozzle and one of the guide thimbles of the reconstitutable fuel assembly of Fig. 1;

Fig. 3 is a top plan view of the control-rod guide thimble shown in Fig. 2, as taken along line 3-3;

Fig. 4 is a side elevational view of the re-usable locking tube of the attaching structure;

Fig. 5 is a top plan view of the re-usable locking tube, as taken along line 5-5 of Fig. 4;

Fig. 6 is an enlarged fragmentary view of an upper end portion of the re-usable locking tube;

Fig. 7 is a sectional view of the components of the attaching structure in their assembled condition;

Fig. 8 is a fragmentary side-elevational view showing an upper portion of a reconstitutable fuel assembly disposed in a submerged work station with its top nozzle removed, together with the damage rectifying fixture of the present invention positioned above the work station and in readiness to be moved to an operative position for rectifying damage done to some of the guide-thimbles ;

Fig. 9 is an enlarged top plan view of the base of the fixture of Fig. 8 ;

Fig. 10 is a sectional view of the fixture base, as taken along line 10-10 of Fig. 9 ;

Fig. 11 is an enlarged elevational view, with portions broken away and sectioned, of a positioning element in the form of a non-compressing socket, for use together with the fixture base of Fig. 9 ;

Fig. 12 is a cross-sectional view of the positioning element, as taken along line 12-12 of Fig. 11 ;

Fig. 13 is an enlarged elevational view, with portions broken away and sectioned, of a compressing socket tool for use together with the fixture base of Fig. 8 ;

Fig. 14 is a cross-sectional view of the compressing socket tool, as taken along line 14-14 of Fig. 13 ;

Fig. 15 is an enlarged elevational view of an expander pin tool for use together with the fixture base of Fig. 8 ;

Fig. 16 is a cross-sectional view of the expander pin tool, as taken along line 16-16 of Fig. 15 ;

Fig. 17 is a top plan view of the damage rectifying fixture shown as mounted at the submerged work station in an initial or starting position ;

Fig. 18 is a sectional view of the submerged work station and of the damage rectifying fixture in its starting position, as taken along line 18-18 of Fig. 17 ;

Fig. 19 to 21 are sectional views similar to Fig. 18 but showing the damage rectifying fixture in different operating phases ;

Fig. 22 is an enlarged elevational view, with portions broken away and sectioned, of an adapter sleeve such as used to form a modified non-structural joint ;

Fig. 23 is an enlarged fragmentary view, in section, of the top nozzle having attached thereto an adapter sleeve such as shown in Fig. 22 ; and

Fig. 24 is a view similar to Fig. 23 but showing the adapter sleeve telescoped over a severed guide-thimble end portion, and a locking tube inserted in the adapter sleeve.

In the following description, like reference characters designate like or corresponding parts throughout the several views, and terms such as « forward », « rearward », « left », « right », « upwardly », « downwardly », and the like, are employed as words of convenience not to be construed as limiting terms.

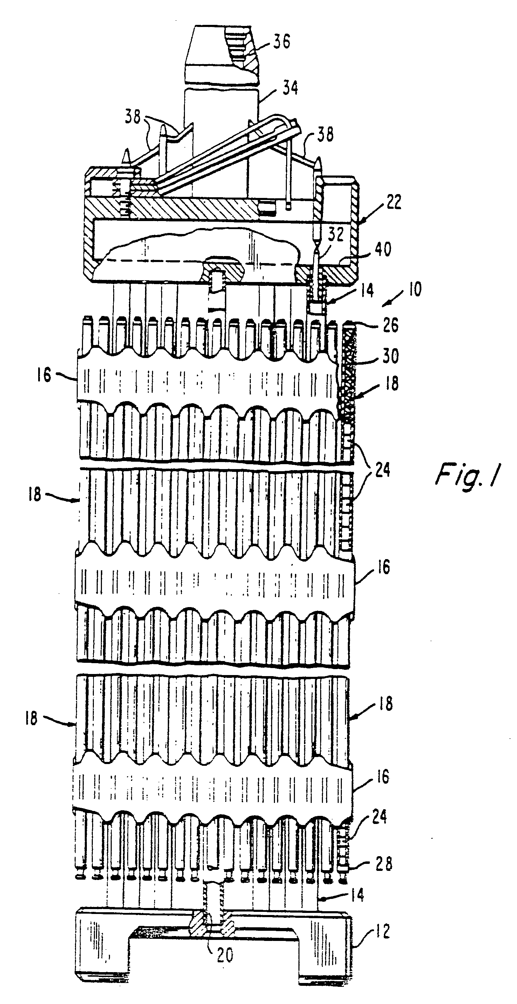

Referring now to the drawings, and particularly to Fig. 1, the reconstitutable fuel assembly illustrated therein and generally designated with reference numeral 10 comprises basically a lower end structure or bottom nozzle 12 for supporting the assembly on the lower core plate (not shown) in the core region of a reactor (not shown), longitudinally extending guide tubes or thimbles 14 projecting upwardly from the bottom nozzle 12, a plurality of transverse grids 16 axially spaced along the guide thimbles 14, an organized array of elongate fuel rods 18 transversely spaced and supported by the grids 16, an instrumentation tube 20 located in the center of the fuel assembly, and an upper end structure or top nozzle 22 removably attached to upper end portions of the guide thimbles 14 to form an integral assembly.

Each of the fuel rods 18 contains nuclear fuel pellets 24 and has its opposite ends hermetically sealed with end plugs 26, 28. A plenum spring 30 is disposed between the upper end plug 26 and the stack of pellets 24 to maintain the pellets firmly stacked. The fuel pellets 24, composed of fissile material, are responsible for creating the reactive power of the nuclear reactor. During operation, a liquid moderator/coolant such as water, or water containing boron, is pumped upwardly through the fuel assemblies of the reactor core in order to extract therefrom heat for the production of useful work.

The fission process is controlled by means of control rods 32 which are reciprocally movable in the guide thimbles 14 by means of a rod cluster control mechanism 34 disposed on the top nozzle 22 and including an internally threaded cylindrical member 36 having radially extending flukes or arms 38, each of which is connected to a control rod 32, all as well known in the art.

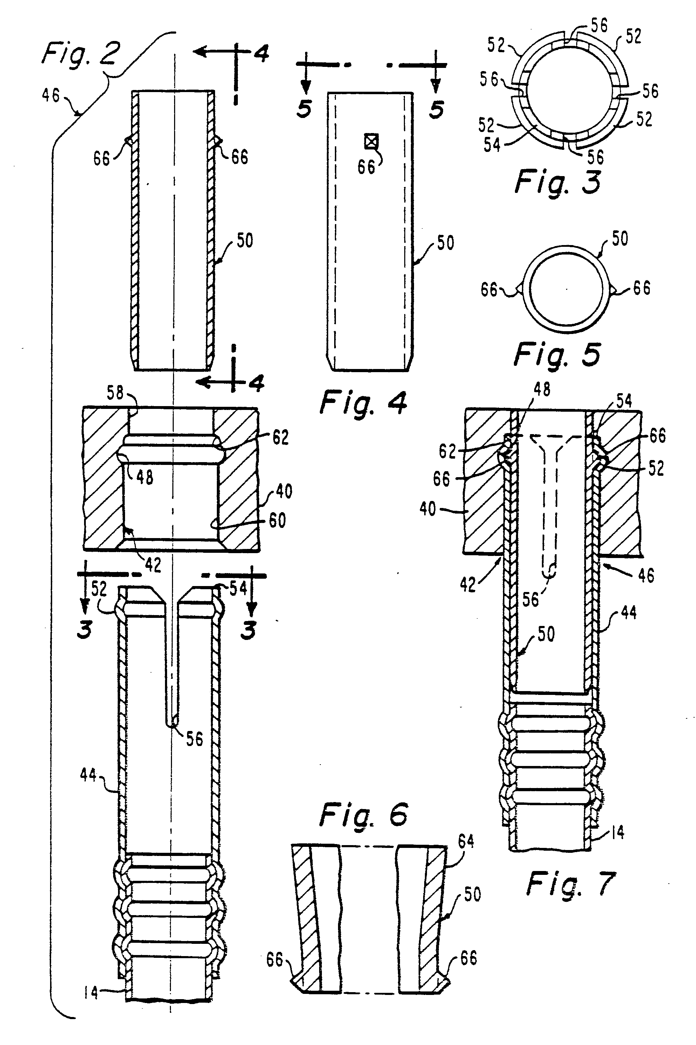

The top nozzle 22 has an adapter plate 40 with a plurality of control rod passageways, such as the passageway 42 shown in Figs. 2 and 7, formed therethrough. The control rod guide thimbles 14 have upper end portions 44 coaxially positioned within the passageways 42 of the adapter plate 40. In order to render the fuel rods 18 accessible for reconstituting the fuel assembly 10, the top nozzle 22 is removably connected to the upper end portions 44 of the guide thimbles 14 by means of attaching structures providing a plurality of structural joints between the adapter plate 40 of the top nozzle and guide thimbles of the fuel assembly.

The attaching structure for one of the structural joints is shown in Figs. 2 to 7. It is generally designated with reference numeral 46 and is of the kind disclosed in Applicant's European patent publication No. 0196916. As seen from Figs. 2 and 7, each attaching structure 46 comprises an outer socket defined in the top-nozzle adapter plate 40 by the respective passageway 42 and having an annular groove 48 formed circumferentially in the wall thereof, an inner socket defined on the upper end portion 44 of the respective guide thimble 14, and a re-usable locking tube 50 inserted in the inner socket to maintain it in locking engagement with the outer socket.

Each inner socket includes an annular bulge 52 formed circumferentially on the upper end portion 44 of the guide thimble 14 only a short distance below its upper end 54. Elongate axial slots 56 are formed in the upper end portion 44 of the guide thimble 14 to permit elastic compression or collapse of the slotted end portion for the purpose of enabling the circumferential bulge 52 to be moved into and from locking engagement with the annular groove 48.

The passageway 42 in the adapter plate 40 which defines the outer socket consists of an upper bore 58 and a lower bore 60. The lower bore 60 is considerably longer than the upper bore 58 and contains the annular groove 48 which is spaced a short distance below a downwardly facing ledge 62 forming the transition between the two bore 58 and 60, the lower bore 60 having a larger diameter than the upper bore 58. The ledge 62 serves as a stop cooperating with the upper end 54 of the guide-thimble end portion 44 to stop axial movement of the latter into the passageway 42 when the bulge 52 is aligned and mates with the groove 48.

The locking tube 50 is inserted, from above the top nozzle 22, into locking position with respect to the guide-thimble end portion 44 forming the associated inner socket. When in its locking position, as seen in Fig. 7, the locking tube 50 retains the bulge 52 of the inner socket in locking engagement with the annular groove 48 and thereby prevents the inner socket from being withdrawn from the outer socket.

The locking tube 50 has an upper marginal end portion 64 (Fig. 6) which flares outward slightly (e. g. 1-2°), having an outer diameter slightly larger than the diameter of the upper bore 58, and it has formed thereon a pair of small dimples 66 (being shown exaggerated in size) for securing it in its locking position. When the locking tube 50 is in its locking position, its portion 64 forms a tight frictional fit with the adapter plate 40, and the dimples 66 mate with the circumferential groove 48 in the adapter plate passageway 42. The walls of the locking tube 50 are sufficiently resilient to enable them to yield is allowing dislodgement of the dimples 66 from the groove 48 and withdrawal of the tube from its locking position.

## Apparatus for Rectifying Damaged Guide-Thimble Upper End Portions

When it is desired to inspect, remove, replace and/or rearrange the fuel rods 18 of the reconstitutable fuel assembly 10 after some use thereof, the irradiated assembly must be removed from the reactor core and lowered into a work station by means of standard handling equipment (not shown). In the work station, the fuel assembly is submerged in coolant and maintenance operations are performed through manipulation of remotely controlled, submersible equipment, one component of which is used for removing and subsequently replacing the locking tubes, and another component of which is used for removing and subsequently remounting the top nozzle 22. Equipment suitable for these purposes is discloses in Applicant's European patent publications No. 0182149, No. 0183068, No. 0187651 and No. 0189797.

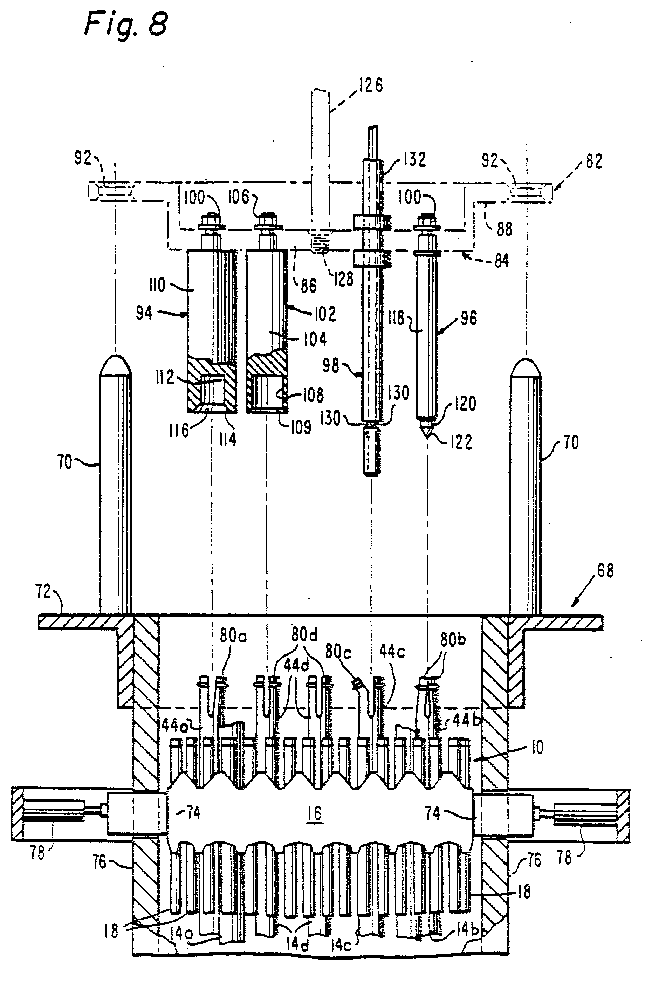

Referring to Fig. 8, the work station 68 includes a top flange 72 with a pair of elongate bullet-nose guide members 70 extending upright from two diagonal corners thereof. The guide members 70 assist in aligning the various components used to remove and replace the locking tubes 50 and the top nozzle 22. The work station 68 includes further two pairs of opposed movable pads 74 (only one pair being shown) which are mounted on and project through side walls 76 of the work station at the elevation of the uppermost grid 16 of the fuel assembly 10. The pads 74 have associated therewith cylinders 78 which are mounted on the side walls 76 and operable to advance the pads 74 towards and against the adjacent sides of the grid 16 so as to hold the assembly 10 in fixed relation with respect to the work station.

In Fig. 8, there are depicted three different kinds of damage which, although improbable, could possibly be done to the upper end portions 44 (or extension sleeves) of the guide thimbles 14, and particularly to the segments 80 thereof separated by the slots 50 (Fig. 2), in the event they are struck by a falling object or bumped by some piece of equipment at a time, during reconstitution of the fuel assembly 10, when the guide thimbles 14 are exposed after the removal of the top nozzle 22. The first type of segment damage, shown as sustained by the end portion 44a of guide thimble 14a, consists in the flaring or bending of one or both of the segments 80a outwards and away from the straight upright position thereof. The guide-thimble end portion 44a thus damaged will not fit into the corresponding passageway 42 of the top-nozzle adapter plate 40 when the top nozzle is to be remounted on the guide thimbles. The second type of segment damage, shown as sustained by the upper end portion 44b of guide thimble 14b, consists in the bending of one or both of the segments 80b inwards from the straight upright position thereof. The guide-thimble end portion 44b thus damaged may fit into the corresponding adapter-plate passageway 42 but its bulge 52 will not seat properly in the groove 48 within the passageway and the damaged end portion 44b will not receive a locking tube 50.

In accordance with the invention, both of these two types of segment damage are directly repairable, as will be explained shortly. The third type of damage, shown as sustained by the upper end portion 44c of guide-thimble 14c, consists in that one or both of the segments 80c are bent outwards or otherwise damaged so severely as not to be directly repairable, such as by re-straightening. The invention provides for this kind of damage to be rectified by removing the affected section of the guide-thimble portion 44c and replacing it with a substitute structure, likewise as described later herein.

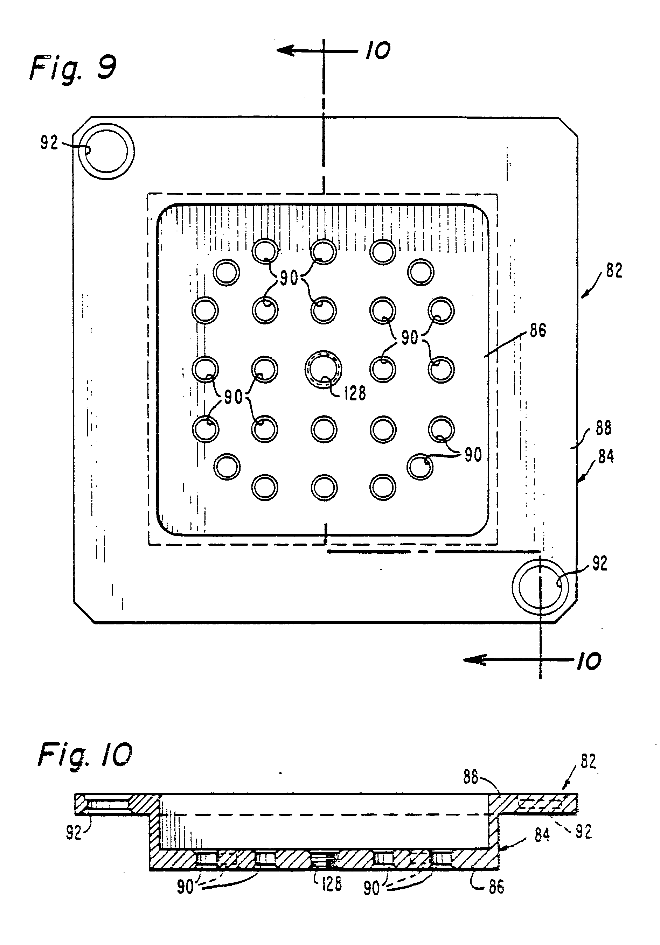

Turning to Figs. 9 to 16 as well as Fig. 8, there will now be described the fixture embodying the invention and adapted to be used during reconstitution of the fuel assembly 10, if the need arises, to rectify (i. e. repair or remove) damage done to the axially segmented upper end portions 44 of any of the guide thimbles 14.

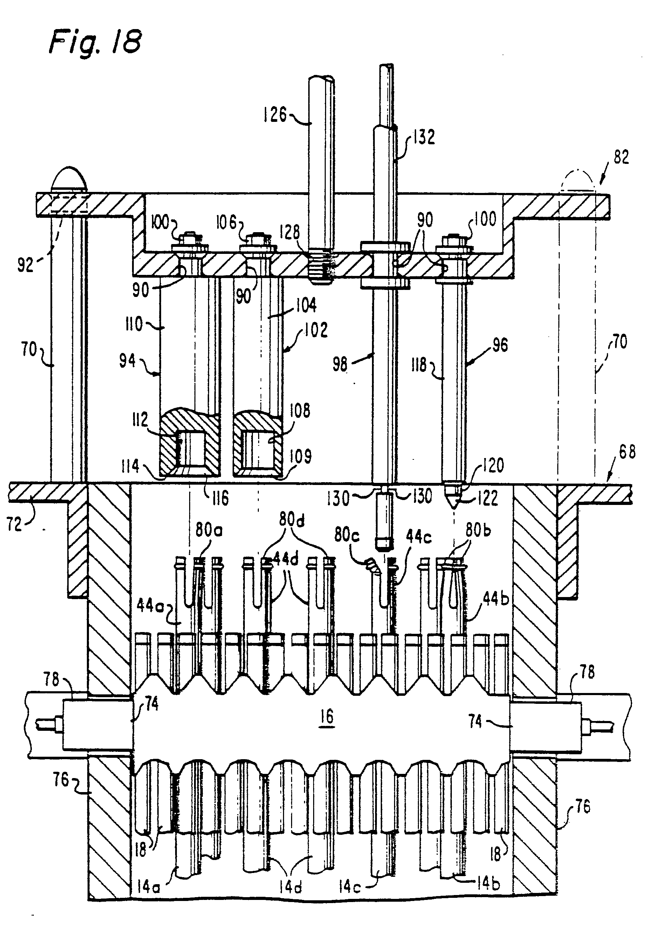

As shown particularly in Figs. 9 and 10, the damage rectifying fixture, generally designated 82, includes a base 84 comprising a generally square plate 86 and a frame 88 connected thereto. The plate 86 has a plurality of tool positioning openings 90 defined therein in a pattern matched with that of the guide thimbles 14. The frame 88 has means for mounting the base 84 on the work station 68, which means are in the form of a pair of aligning holes 92 defined in two diagonal corners of the frame and dimensioned to receive the upright guide members 70 projecting from the top flange 72 of the work station. When the base 84 is positioned above the station 68, as seen from Fig. 8, and then is lowered just far enough for the guide members 70 of the station to penetrate through the aligning holes 92, as shown in Fig. 18, the tool positioning openings 90 of the base 84 are in proper axial alignment with the exposed upper end portions 44 of the guide thimbles 14 of the fuel assembly held in the work station.

The damage rectifying fixture 82 includes further a set of three different tools 94, 96, 98 each for rectifying a different one of the three types of damage described above. Each of the tools 94, 96, 98 is selectively mountable on the base plate 86, at any one of the openings 90 therein, by means of a threaded nut-and-bolt connection 100 provided adjacent the upper end of the tool.

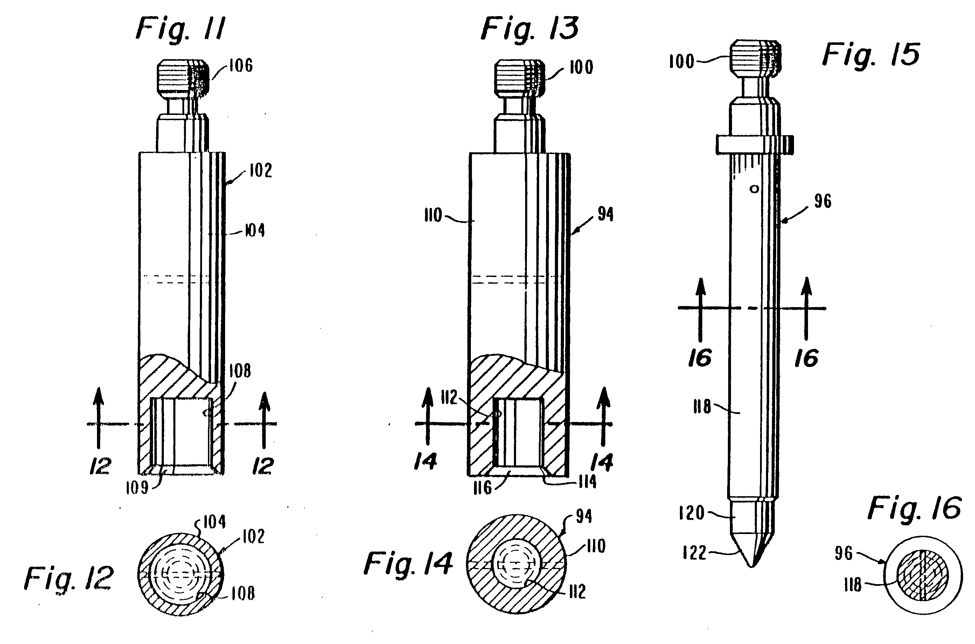

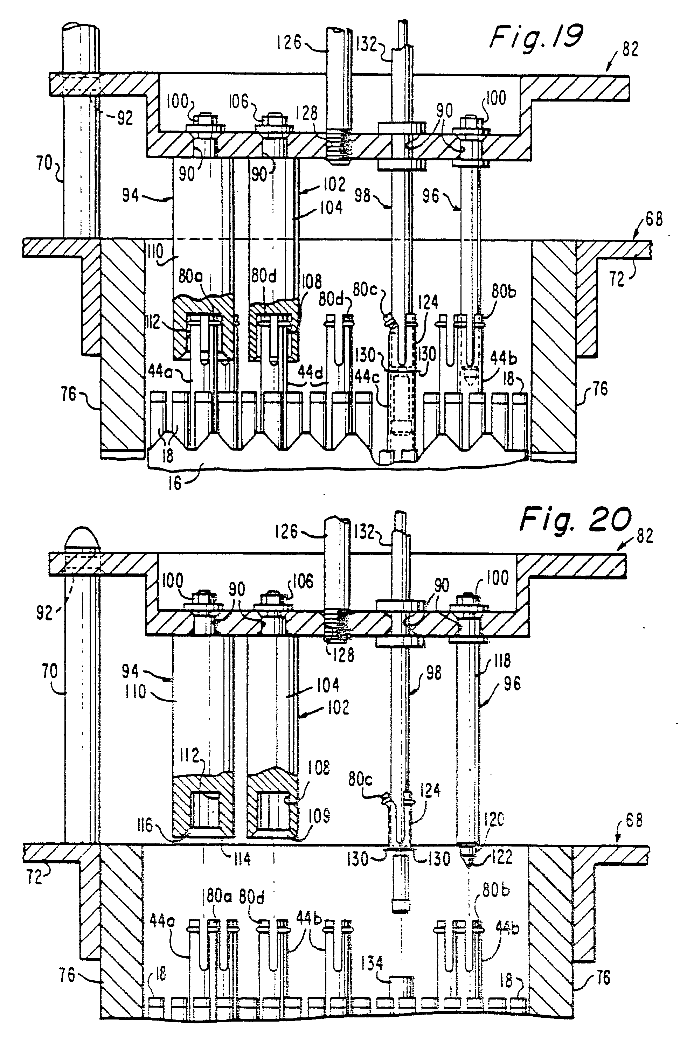

In addition to the damage rectifying tools 94, 96, 98, the fixture 82 includes a group of positioning elements 102 mounted in selected ones of the base openings 90 which will not be occupied by any of the tools. As best seen from Figs. 11 and 12, each positioning element 102 is a non-compressing socket having a cylindrical body 104 with a cylindrical cavity 108 defined in the lower end thereof, and with a threaded connecting portion 106 for attaching the positioning element to the base plate 86 at one of the openings 90. The body 104 has an outwardly tapered lower guide opening 109 leading into the cavity 108 which latter has a diameter slightly larger than the outside diameter of an undamaged one of the guide-thimble upper end portions 44, thus enabling the positioning element 102 to be telescopically positioned on the undamaged guide-thimble upper end portion 44d, as seen in Fig. 19. Thus, selection of the specific positioning holes 90 in the fixture base 84 for attachment of the non-compressing socket elements 102 will be according to the location of undamaged guide thimble portions 44d, preferably four in number (only one is shown in the drawings for clarity), with one in each quadrant of the fuel assembly skeleton. The function of the positioning elements 102 is to precisely locate the fixture 82 relative to the guide-thimble upper end portions 44 so as to ensure accurate performance of the damage rectifying operations carried out by the tools 94, 96, 98. Specifically, the purpose of the socket elements 102 is to locate the fixture 82 at a precise distance above and with the base plate extending parallel to the normal plane of the top edges 54 (Figs. 2, 7) of the guide thimbles.

Figs. 13 and 14 show the damage rectifying tool 94 designed to repair the first type of damage described above with respect to the segment 80a on the guide-thimble upper end portion 44a. The tool 94 takes the form of a compressing socket having a cylindrical body 110 with a cylindrical cavity 112 defined in the lower end thereof, and with a threaded connecting portion for attaching the tool 94 to the base plate 86 at one of the openings 90. The body 110 has an outwardly tapered lower edge 114 defining a guide opening 116 leading into the cavity 112. The cavity 112 has a diameter slightly less than the outside diameter of an undamaged one of the guide-thimble upper end portions 44, which adapts the compressor socket tool 94 to operate to rectify repairable damage to the guide thimble-upper end portion 44a having an outwardly bent segment 80a by compressing the segment 80a to its original position, as seen in Fig. 19. Thus, the compressing socket tools 94 would be attached at positioning holes 90 of the base 84 corresponding to the locations of guide thimbles having damage of the first type.

In Figs. 15 and 16, there is shown the damage rectifying tool 96 designed to repair the second type of damage described above with respect to the segment 80b on the guide-thimble upper end portion 44b. The tool 96 takes the form of an expander pin having a cylindrical body 118 which has, adjacent its upper end, the threaded connecting portion 100 for attached the tool 96 to the base plate 86 at one of the openings 90, and has adjacent its lower end a reduced-diameter section 120 with a tapered guide end 122. The body 118 has a diameter slightly less than the inside diameter of an undamaged one of the upper end portions 44 so that the expander pin tool 96 will operate to rectify repairable damage to the guide-thimble upper end portion 44b having an inwardly bent segment 80b by expanding the segment 80b outward to its original position, as seen in Fig. 19. Thus, expander pin tools 96 would be attached at positioning holes 90 of the base 84 corresponding to locations of guide thimbles having damage of the second type.

Finally, the tool 98 for rectifying the third type of damage preferably takes the form of a precision internal cutter, such as either of the precision internal cutters disclosed in Applicant's European patent publication No. 0145185. The cutter tool 98 is operable to rectify irreparable damage, such as done to the bent segment 80c of the guide-thimble upper end portion 44c, by severing and capturing a predetermined section 124 of the guide-thimble upper end portion 44c including the irreparably damaged segment 80c, as seen in Figs. 19 and 20.

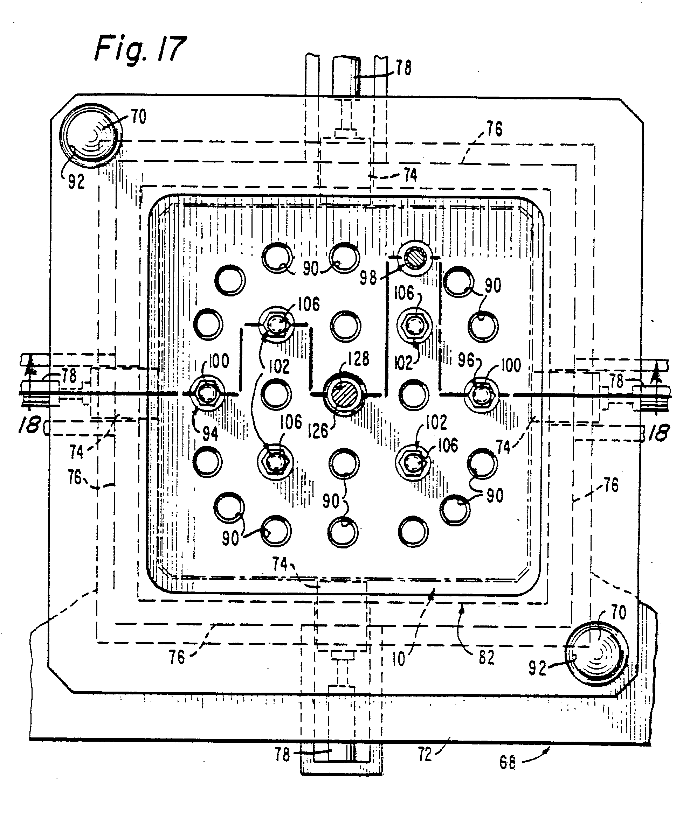

In Figs. 17 and 18, the damage rectifying fixture 82 is shown positioned in the work station 68 such that the top ends of the guide members 70 extend through the holes 92 of the fixture base 84. A long-handled lifting tool (partially shown at 126) has its lower end threadedly engaged in a central bore 128 of the base plate 86 and is used both to move the fixture 82 to the starting position shown in Figs. 17 and 18, and to move it further downward toward the guide thimbles 14 in carrying out the rectifying operations.

Normally, if damage such as described above does occur to a fuel assembly, it is likely to be only of one of the above-mentioned types at any one time so that each damage rectifying operation using an appropriate one of the tools 94, 96, 98 would be carried out separately. However, for the purpose of explaining the three types of damage and the three tools 94, 96, 98 used to rectify them, all three kinds of damage conditions are shown in Fig. 18 and will now be described as being rectified through simultaneous use of the three different tools. Therefore, in Figs. 17 and 18, the fixture 82 is illustrated with one compressing socket tool 94, one expander pin tool 96, one cutter tool 98, and four non-compressing socket elements 102 positioned on the base plate 86 corresponding to the locations of the damaged and undamaged guide-thimble upper end portions 44a-d. It should be noted that the four positioning elements 102 are mounted in four different quadrants of the base plate 86 corresponding to the four quadrants of the fuel assembly 10.

Downward movement of the fixture 82, by means of the long-handled tool from its starting position (Fig. 18) to its lowest or operational position (Fig. 19) causes the four positioning elements 102 to seat telescopically on the four undamaged guide-thimble upper end portions 44d axially aligned therewith, and also causes the compressing socket tool 94 and the expander pin tool 96 to move telescopically over and into, respectively, the damaged upper end portions 44a, 44b of the guide thimbles 14a and 14b. As the tapered lower edge 114 of the tool 94 and the tapered lower end 122 of the tool 96 move over and into, respectively, the bent segments 80a, 80b of the guide thimbles 14a, 14b, they initiate corrective bending of the segments back toward their original or normal positions, which corrective bending is completed as further lowering of the fixture 82 to its lowest position (Fig. 19) causes the tools 94 and 96 thereon to force the damaged guide-thimble upper end portions 44a, 44b to resume and plastically set at their normal outside diameter which will permit them subsequently to properly re-seat in the passageways 42 of the top-nozzle adapter plate 40.

The above-described downward movement of the fixture 82 from its initial position (Figs. 18) also causes the cutter tool 98 to be inserted into the irreparably damaged upper end portion 44c of the guide thimble 14c. Upon operation of the cutter tool 98 by means of a long-handled tool (partially shown at 132), blades 130 of the cutter tool 98 will sever the section 124 with the irreparably damaged segment 80c from the remainder of the guide-thimble upper end portion 44c. The radially advanced cutter blades 130 will hold the cut-off section captive on the cutter tool for removal together with the fixture 82 when the latter is withdrawn from the work station 68, as shown in Fig. 20.

Whereas the first and second types of damage have now been corrected and the repaired upper end portions 44a, 44b of the guide thimbles 14a, 14b are ready to have the top nozzle 22 remounted thereon and the structural joints with its adapter plate 40 completed, the severing of section 124 from the end portion 44c of the guide thimble 14c has left the guide-thimble end portion 44c too short for rejoining to the top nozzle. Indeed, it has left it so short that there would be a gap between its cut upper end 134 (Fig. 20) and the adapter plate 40, which gap would enable disruptive coolant cross-flow to occur.

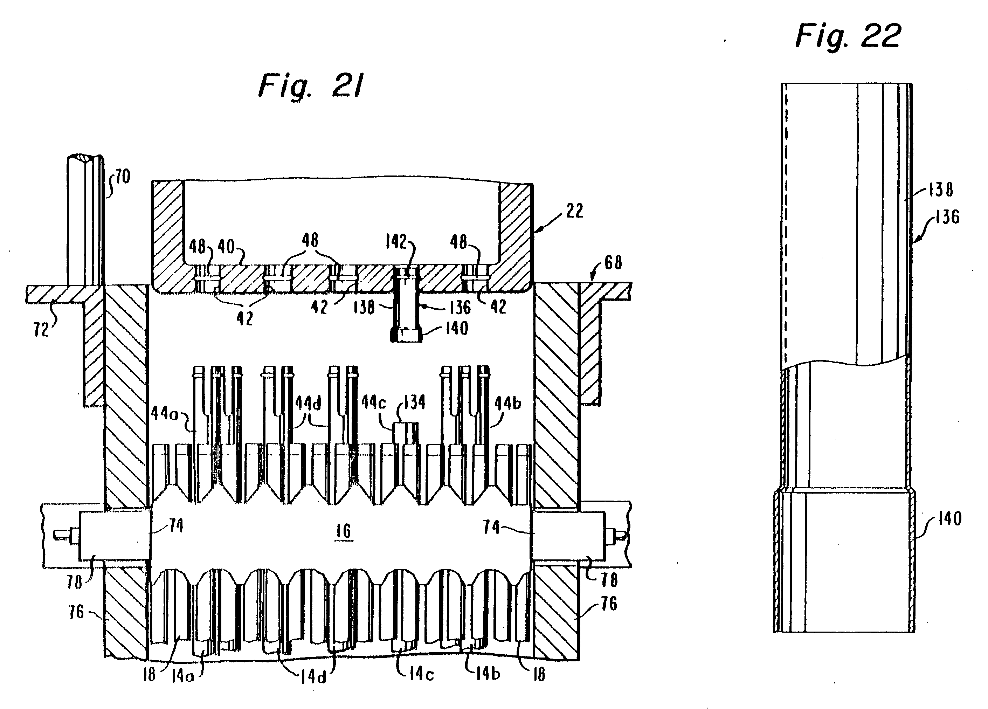

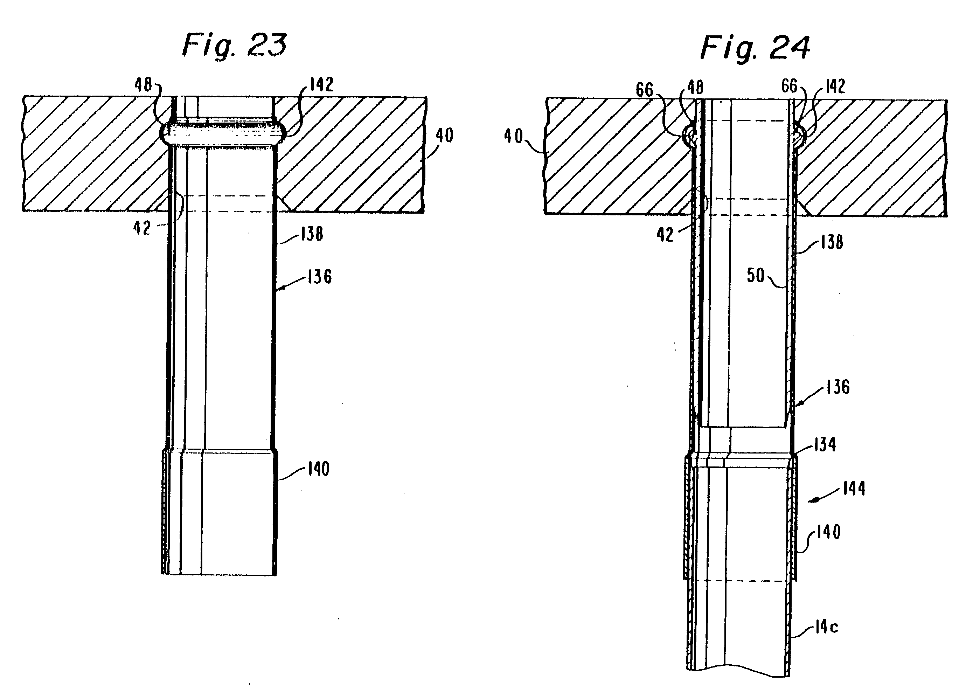

In order to remedy this situation, the invention provides for the use of an adapter sleeve 136 (Figs. 21-25) in each passageway 42 in the top-nozzle adapter plate 40 which is aligned with a cut and shortened guide thimble 14c. The adapter sleeve 136 is longer than the damaged section 124 severed from the guide thimble 14c. Thus, the adapter sleeve 136 has a main or upper portion 138 of substantially the same length and the same outside diameter as the severed section 124, and a connecting or lower portion 140 which is much shorter than the main portion 138 and has a sufficiently larger inner diameter to fit snugly over the shortened end portion 44c of the guide thimble 14c, as seen from Fig. 24, so as to form a slip fit joint but no rigid connection therewith. This enables the sleeve 136 to connect the shortened guide thimble 14c to the top-nozzle adapter plate 40 as the top nozzle 22 is remounted on the undamaged and the repaired upper end portions 44d, 44a of the guide thimbles 14. For example, the adapter sleeve 136 may be approximately 4 cm long, with its upper portion 138 measuring about 2.5 cm is length and having the same inside and outside diameters as the severed section 124, and with its lower portion 140 measuring about 1.5 cm and having a diameter sufficiently enlarged to form a close-clearance fit with the shortened upper end portion 44c of the guide thimble 14c.

The above solution requires no changes to be made to the top nozzle as manufactured, other than merely attaching to the adapter plate 40 one or more adapter sleeves, such as adapter sleeve 136, as needed. Each adapter sleeve 136 is permanently connected to the adapter plate simply by providing the sleeve 136 with a roll-formed circumferential bulge 142 mating with the groove 48 in the associated passageway 42 of the adapter plate of the original top nozzle 22 to be remounted or of a replacement nozzle, as the case may be.

As indicated above, the adapter sleeve 136 forms no structural joint between the top nozzle 22 and the respective guide thimble 14c but forms part of a non-structural joint, generally designated 144 in Fig. 24, which carries no load. However, because of conservative load margins for structural joints connecting the top nozzle to the skeleton, some of the structural joints provided by attaching structure, such as structure 46 in Fig. 7, can be eliminated without violating design criteria, the load of the fuel assembly 10 being carried by the remaining structural joints formed by attaching structure 46, each of which latter thus will support a greater load than it did before the damage occurred and when the full complement of structural joints shared the load. However, depending upon the fuel configuration, at least four to six irreparably damaged sections 124 can be eliminated without exceeding design limits on the remaining structural joints 46. In other words, a fuel assembly with twenty-four guide thimbles should have at least three times as many structural joints between the top nozzle and the guide thimbles as there are non-structural joints.

The adapter sleeve 136 is made of the same material, i. e. stainless steel, as the severed section 124 of the guide-thimble upper end portion 44c. The adapter sleeve 136 does not require a locking tube 50 but it may be desirable to insert one therein in order to maintain the same inside dimensions as exist in normal joints.

The adapter sleeve 136 can be readily and quickly installed, remotely and under water into an irradiated top nozzle as well as through a « hands-on » procedure into a new and non-irradiated replacement nozzle. After adapter sleeves, such as sleeve 136, have been installed in all the adapter-plate passageways 42 aligned with shortened guide-thimble end portions, the top nozzle 22 can be mounted on the fuel assembly skeleton in the usual manner using standard reconstitution fixtures and tooling, and in accordance with the same procedures as developed for standard removable top nozzle handling. Utilizing adapter sleeves 136 compromises in no way subsequent reconstitutions such as may have to be performed on the fuel assembly.

Summing up, the purpose of the adapter sleeve 136 is to bridge the gap between the upper end 134 of a shortened guide-thimble end portion and the adapter plate 40, thereby to provide a continuous protective enclosure for the core component, e. g. control rod, to be introduced in the associated guide thimble, and also to preclude cross-flow and maintain normal upward flow of primary coolant through and alongside the guide thimble.

## Claims

1. A fixture (82) for rectifying different types of deformation damage (80a-c) to upper end portions (44a-c) of guide thimbles (14a-c) of a reconstitutable fuel assembly (10) while the fuel assembly is being held in a work station (68) and has its top nozzle (22) removed to expose the guide thimbles (14), characterized by

a) a base (84) having a plurality of tool-positioning openings (90) defined therein in a pattern matching the pattern of the guide thimbles (14) in the fuel assembly (10) ;

b) means (92, 70) for mounting said base (84) on said work station (68) such that said tool-positioning openings (90) are in axial alignment with the upper end portions (44) of the respective guide thimbles (14) of the fuel assembly ; and

c) several different kinds of tools (94, 96, 98) each for rectifying one of the different types of guide-thimble damage, said tools being selectively mountable in the tool-positioning openings (90) and operable each to rectify the particular type of damage to the guide-thimble end portion aligned with the tool-positioning opening having the tool mounted therein.

2. A fixture according to claim 1, characterized in that said means (92, 70) for mounting the base (84) on the work station (68) guide the base for movement thereof between a first position in which any said tool (94 or 96 or 98) mounted in one of the tool-positioning openings (90) of the base and aligned with a damaged guide-thimble end portion (44a, b or c) is spaced from the latter, and a second position in which said tool is in operative engagement with said guide-thimble end portion.

3. A fixture according to claim 2, characterized in that said base (84) has disposed thereon positioning elements (102) effective, upon movement of the base to said second position, to ensure precise alignment of said tool-positioning openings (90) with the respective guide thimbles (14) of the fuel assembly.

4. A fixture according to claim 3, characterized in that the base (84) has said positioning elements (102) selectively mounted in tool-positioning openings (90) thereof which are located in positions corresponding to the positions of undamaged ones (44d) of said guide thimbles (14) in the fuel assembly, each of said positioning elements (102) being designed to telescopically engage the associated undamaged guide-thimble end portion (44d), without deforming it, upon movement of the base to said second position thereof.

5. A fixture according to claim 4, characterized in that each of said positioning elements (102) is a non-compressing socket adapted to slide telescopically over the associated undamaged guide-thimble end portion (44d).

6. A fixture according to claim 2, 3 4 or 5, characterized in that said different kinds of tools (94, 96, 98) include a compressing socket (94) for repairing outwardly bent guide-thimble end portions, said compressing socket (94), upon movement of said base (84) to the second position thereof, telescopically sliding over the outwardly bent guide-thimble end portion (44a) aligned therewith and compressing it to the original shape thereof.

7. A fixture according to any one of claims 2 to 6, characterized in that said different kinds of tools (94, 96, 98) include an expander pin (96) for repairing inwardly bent guide-thimble end portions (44b), said expander pin (96), upon movement of said base (84) to the second position thereof, penetrating axially into the inwardly bent guide-thimble end portion (44b) aligned therewith and expanding it to the original shape thereof.

8. A fixture according to any one of claims 2 to 7, characterized in that said different kinds of tools (94, 96, 98) include a tube cutter (98) for severing and capturing, for removal from the fuel assembly, irreparably damaged sections (124) of guide-thimble end portions (44c), said tube cutter (98), upon movement of said base (84) to the second position thereof, being positioned for severing the irreparably damaged section (124) of the guide-thimble end portion (44c) aligned therewith, and then being operable to sever and capture said irreparably damaged section (124).

9. A fixture according to claim 8, characterized by adapter means (136) for replacing the irreparably damaged section (124) severed from said guide-thimble end portion (44c), said adapter means (136) comprising an elongate member adapted to be rigidly connected to one, and to be slip-fit to the other, of the top nozzle (22) of the fuel assembly (10) and the shortened guide-thimble end portion (44c) from which the irreparably damaged section (124) was severed, thereby to form a non-structural joint between the top nozzle and the guide-thimble (14c) having the shortened end portion (44c).

10. A fixture according to claim 9, characterized in that said elongate member is a sleeve (136).

11. A fixture according to claim 10, characterized in that said sleeve (136) has one end portion (138) which fits into a passageway (42) formed in an adapter plate (40) of said top nozzle (22), and an opposite end portion (140) which is telescopically connectable to the shortened guide-thimble end portion (44c).

12. A fixture according to claim 11, characterized in that said one end portion (138) of the sleeve (136) is adapted to be rigidly connected to said adapter plate (40) when inserted in said passageway (42) thereof, and said opposite end portion (140) of the sleeve (136) is adapted to be slip-fit onto said remainder of the guide-thimble end portion (44c).

## Patentansprüche

1. Eine Haltevorrichtung (82) zum Korrigieren verschiedener Arten von Verformungsschäden (80a-c) an oberen Endstücken (44a-c) von Führungsmuffen (14a-c) eines wiederherstellbaren Brennsatzes (10) während dieser in einer Arbeitsstation (68) gehalten und seine Kopfdüse (22) entfernt ist, um die Führungsmuffen (14) freizulegen, gekennzeichnet durch

a) eine Basis (84) mit einer Vielzahl von Öffnungen (90) zum Inlagebringen eines Werkzeugs, die in einem Muster angeordnet sind, welches mit dem Muster der Führungsmuffen (14) im Brennsatz (10) übereinstimmt ;

b) Mittel (92, 70) zum Anbringen der Basis (84) an der Arbeitsstation (68), derart, daß die Öffnungen (90) zum Inlagebringen des Werkzeugs mit den oberen Endstücken (44) der entsprechenden Führungsmuffen (14) des Brennsatzes ausgerichtet sind ;

c) mehrere verschiedene Arten von Werkzeugen (94, 96, 98), von denen jedes einen Schaden der verschiedenen Schadensarten der Führungsmuffen korrigiert, wobei die Werkzeuge selektiv in den Öffnungen (90) zum Inlagebringen fest montierbar sind und jedes Werkzeug zum Korrigieren der bestimmten Schadensart des mit der ihm zugeordneten Öffnung ausgerichteten Endstückes betätigbar ist.

2. Haltevorrichtung nach Anspruch 1, dadurch gekennzeichnet, daß die Mittel (92, 70) zum Festlegen der Basis (84) an der Arbeitsstation (68) die Basis führen und zwischen einer ersten Stellung und einer zweiten Stellung bewegen, wobei in der ersten Stellung jedes Werkzeug (94 oder 96 oder 98), das in einer der Öffnungen (90) der Basis montiert und mit einem beschädigten Endstück (44a, b oder c) ausgerichtet ist, von diesem sich in einem Abstand befindet und das Werkzeug in der zweiten Stellung arbeitsmäßig mit dem Endstück der Führungsmuffe im Eingriff steht.

3. Haltevorrichtung nach Anspruch 2, dadurch gekennzeichnet, daß die Basis (84) Einstell-Elemente (102) aufweist, die beim Bewegen der Basis zu der zweiten Stellung wirksam sind, um ein genaues Ausrichten der Werkzeug-Einstell-Öffnungen (90) mit den entsprechenden Führungsmuffen (14) des Brennsatzes sicherzustellen.

4. Haltevorrichtung nach Anspruch 3, dadurch gekennzeichnet, daß die Einstell-Elemente (102) der Basis (84) selektiv in Werkzeug-Einstell-Öffnungen (90) montiert sind, die sich in Stellungen befinden, welche den Stellungen nicht beschädigter Endstücke (44d) der Führungsmuffen im Brennsatz entsprechen, wobei jedes Einstellelement (102) so ausgelegt ist, daß es das ihm zugeordnete nicht beschädigte Endstück (44d) der Führungsmuffe ohne es zu zerstören teleskopisch erfaßt, wenn sich die Basis in die zweite Stellung bewegt.

5. Haltevorrichtung nach Anspruch 4, dadurch gekennzeichnet, daß jedes Einstell-Element (102) als nicht zusammendrückende Fassung ausgeführt ist, derart, daß sie teleskopisch über das ihr zugeordnete nicht beschädigte Endstück (44d) der Führungsmuffe gleitet.

6. Haltevorrichtung nach Anspruch 2, 3, 4 oder 5, dadurch gekennzeichnet, daß die verschiedenen Arten von Werkzeugen (94, 96, 98) eine zusammendrückende Fassung (94) zum Reparieren nach außen gebogener Endstücke von Führungsmuffen aufweisen, wobei die zusammendrückende Fassung (94) beim Bewegen der Basis (84) zur zweiten Stellung teleskopisch über das mit ihr ausgerichtete nach außen gebogene Endstück (44a) gleitet und dieses in seine ursprüngliche Form preßt.

7. Haltevorrichtung nach einem der Ansprüche 2 bis 6, dadurch gekennzeichnet, daß die verschiedenen Arten von Werkzeugen (94, 96, 98) einen Expanderstift (76) zum Reparieren nach innen gebogener Führungsmuffen-Endstücke (44b) aufweisen, wobei der Expanderstift (96) beim Bewegen der Basis (84) in die zweite Stellung axial in das mit ihm ausgerichtete, nach innen gebogene Endstück (44b) eindringt und dieses in seine ursprüngliche Form weitet.

8. Haltevorrichtung nach einem der Ansprüche 2 bis 7, dadurch gekennzeichnet, daß die verschiedenen Arten von Werkzeugen (94, 96, 98) einen Rohrschneider (98) zum Trennen und Ergreifen aufweisen, um nicht reparierbare beschädigte Teile (124) der Endstücke (44c) von Führungsmuffen zu entfernen, wobei während der Bewegung der Basis (84) zur zweiten Station der Rohrschneider zum Abtrennen des nicht reparierbaren Teiles (124) des Endstücks (44c) mit diesem ausgerichtet und in Lage gebracht wird und danach für die Schneid- und Greifarbeit betätigbar ist.

9. Haltevorrichtung nach Anspruch 8, dadurch gekennzeichnet, daß ein Adapter (136) zum Auswechseln der vom Endstück (44c) der Führungsmuffe abgetrennten irreparablen beschädigten Teiles (124) vorgesehen ist, wobei der Adapter (136) ein längliches Glied aufweist, das mit einer Kopfdüse (22) starr verbindbar und mit Schiebeseitz auf die andere Kopfdüse des Brennsatzes (10) und das verkürzte Endstück (44c) der Führungsmuffe aufschiebbar ist, von dem das nicht reparierbare Stück (124) abgetrennt wurde, um dabei eine nicht strukturelle Verbindung zwischen der Kopfdüse und der das verkürzte Endstück (44c) aufweisenden Führungsmuffe (14c) zu bilden.

10. Haltevorrichtung nach Anspruch 9, dadurch gekennzeichnet, daß das längliche Glied eine Hülse (136) ist.

11. Haltevorrichtung nach Anspruch 10, dadurch gekennzeichnet, daß die Hülse (136) einen in einen Durchlaß (42) einer Adapterplatte (40) der Kopfdüse (22) passenden Endabschnitt (138) aufweist, während der entgegengesetzte Endabschnitt (140) teleskopisch mit dem gekürzten Endstück (44c) der Führungsmuffe verbindbar ist.

12. Haltevorrichtung nach Anspruch 11, dadurch gekennzeichnet, daß der in den Durchlaß (42) der Adapterplatte (40) eingesetzte Endabschnitt (138) der Hülse (136) starr mit der Adapterplatte (40) verbindbar ist, und der entgegengesetzte Endabschnitt (140) der Hülse (136) mit Gleitsitz auf den Rest des Endstückes (44c) der Führungsmuffe anbringbar ist.

## Revendications

1. Dispositif (82) pour rectifier différents types de dommages (80a à c) par déformation aux extrémités supérieures (44a à c) des chaussettes (14a à c) de guidage d'un assemblage combustible reconstituable (10), pendant que l'assemblage combustible est maintenu dans un poste (68) d'usinage, et que son embout supérieur (22) est enlevé pour dégager les chaussettes (14) de guidage, caractérisé par :

a) une base (84) ayant une pluralité d'ouvertures (90) de positionnement d'outils définies dans cette base selon une disposition qui correspond à la disposition des chaussettes (14) de guidage dans l'assemblage combustible (10) ;

b) des moyens (92, 70) pour monter ladite base (84) sur ledit poste (68) d'usinage de telle manière que lesdites ouvertures (90) de positionnement d'outils soient en alignement axial avec les extrémités supérieures (44) des chaussettes respectives (14) de guidage de l'assemblage combustible ; et

c) plusieurs types différents d'outils (94, 96, 98), chacun d'eux étant destiné à rectifier l'un des différents types de dommages des chaussettes de guidage, chacun desdits outils étant montable de façon sélective dans les ouvertures (90) de positionnement d'outils, et chacun pouvant opérer pour rectifier le type particulier de dommage de l'extrémité de la chaussette de guidage alignée avec l'ouverture de positionnement de l'outil dans laquelle est monté l'outil.

2. Dispositif selon la revendication 1, caractérisé par le fait que lesdits moyens (92, 70) pour monter la base (84) sur le poste (68) d'usinage guident la base dans son mouvement entre une première position dans laquelle n'importe lequel desdits outils (94, 96 ou 98) monté dans l'une des ouvertures (90) de positionnement d'outils de la base et aligné avec l'extrémité (44a, b ou c) d'une chaussette de guidage endommagée est espacé de cette dernière, et une seconde position dans laquelle ledit outil est en engagement opérationnel avec ladite extrémité de la chaussette de guidage.

3. Dispositif selon la revendication 2, caractérisé par le fait que sur ladite base (84) sont disposés des éléments (102) de positionnement qui sont utilisés lors du mouvement de la base vers ladite seconde position, pour assurer l'alignement précis desdites ouvertures (90) de positionnement d'outils avec les chaussettes respectives (14) de guidage de l'assemblage combustible.

4. Dispositif selon la revendication 3, caractérisé par le fait que la base (84) a lesdits éléments (102) de positionnement montés de façon sélective dans les ouvertures (90) de positionnement d'outils de cette base, lesquels sont disposés en des positions correspondant aux positions de celles (44d) desdites chaussettes (14) de guidage qui ne sont pas endommagées dans l'assemblage combustible, chacun desdits éléments (102) de positionnement étant conçu pour s'engager de façon télescopique avec l'extrémité (44d) de la chaussette de guidage non endommagée, et sans la déformer, lors du mouvement de la base vers sa seconde position.

5. Dispositif selon la revendication 4, caractérisé par le fait que chacun desdits éléments (102) de positionnement est une douille non compressible adaptée pour coulisser de façon télescopique sur l'extrémité (44d) de la chaussette de guidage non endommagée associée.

6. Dispositif selon l'une quelconque des revendications 2, 3, 4 ou 5, caractérisé par le fait que les différents types d'outils (94, 96, 98) comprennent une douille (94) de compression pour réparer les extrémités de chaussettes de guidage courbées vers l'extérieur, ladite douille (94) de compression, lors du mouvement de ladite base (84) vers sa seconde position, coulissant de façon télescopique sur l'extrémité (44a) de la chaussette de guidage courbée vers l'extérieur et alignée avec elle, et la comprimant vers sa forme originale.

7. Dispositif selon l'une quelconque des revendications 2 à 6, caractérisé par le fait que les différents types d'outils (94, 96, 98) comportent une cheville (96) d'expansion pour réparer les extrémités (44b) de chaussettes de guidage courbées vers l'intérieur, ladite cheville (96) d'expansion, lors du mouvement de ladite base (84) vers sa seconde position, pénétrant axialement dans l'extrémité (44b) de la chaussette de guidage courbée vers l'intérieur, alignée avec elle et lui redonnant sa forme originale.

8. Dispositif selon l'une quelconque des revendications 2 à 7, caractérisé par le fait que les différents types d'outils (94, 96, 98) comportent un coupeur (98) de tubes pour sectionner et saisir, pour les retirer de l'assemblage combustible, les sections (124) endommagées de façon irréparable, ledit coupeur (98) de tubes, lors du mouvement de ladite base (84) vers sa seconde position, étant positionné pour sectionner la section (124) endommagée de façon irréparable de l'extrémité (44c) de la chaussette de guidage alignée avec lui, et étant opérationnel pour sectionner et saisir ladite section (124) endommagée de façon irréparable.

9. Dispositif selon la revendication 8, caractérisé par des moyens (136) d'adaptation pour remplacer la section (124) endommagée de façon irréparable et sectionnée de ladite extrémité (44c) de la chaussette de guidage, lesdits moyens (136) d'adaptation comprenant une pièce allongée adaptée pour être connectée rigidement à une partie et à pouvoir coulisser par rapport à l'autre partie de l'embout supérieur (22) de l'assemblage combustible (10) et de l'extrémité (44c) de la chaussette de guidage raccourcie, de laquelle a été sectionnée la section (124) endommagée de façon irréparable, afin de former un joint non structurel entre l'embout supérieur et la chaussette (14c) de guidage ayant l'extrémité raccourcie (44c).

10. Dispositif selon la revendication 9, caractérisé par le fait que ladite pièce allongée est un manchon (136).

11. Dispositif selon la revendication 10, caractérisé par le fait que ledit manchon (136) a une extrémité (138) qui s'adapte dans un chemin (42) de passage formé dans une plaque (40) d'adaptation dudit embout supérieur (22), et une extrémité opposée (140) qui peut être connectée de façon télescopique à l'extrémité (44c) de la chaussette de guidage raccourcie.

12. Dispositif selon la revendication 11, caractérisé par le fait que ladite extrémité (138) du manchon (136) est adaptée pour être connectée de façon rigide à ladite plaque (40) d'adaptation quand cette extrémité est insérée dans ledit chemin (42) de passage de cette plaque, et que ladite extrémité opposée (140) du manchon (136) est adaptée pour être ajustée de façon coulissante sur ladite partie restante de l'extrémité (44c) de la chaussette de guidage.

*Fig. 1*

Fig. 2

Fig. 3

Fig. 4

Fig. 5

Fig. 6

Fig. 7

# Fig. 8

Fig. 9

Fig. 10

4

Fig. 11

106
102
104
108
109

Fig. 12
104
102
108

Fig. 13

100
110
94
112
116
114

Fig. 14
94
110
112

Fig. 15
100
96
16    16
118
120
122

Fig. 16
96
118

Fig. 17

## Fig. 18

Fig.19

Fig. 20

Fig. 21

Fig. 22

EP 0 222 623 B1

Fig. 24

Fig. 23